Europäisches Patentamt

European Patent Office

Office européen des brevets

(19)

(11) Veröffentlichungsnummer: **0 160 971 B1**

(12) **EUROPÄISCHE PATENTSCHRIFT**

(45) Veröffentlichungstag der Patentschrift: **12.06.91**

(51) Int. Cl.⁵: **H02K 5/167**

(21) Anmeldenummer: **85105594.7**

(22) Anmeldetag: **07.05.85**

(54) **Lagerung für Antriebsmotor eines kleinstventilators.**

(30) Priorität: **09.05.84 DE 3417127**

(43) Veröffentlichungstag der Anmeldung:
**13.11.85 Patentblatt 85/46**

(45) Bekanntmachung des Hinweises auf die
Patenterteilung:
**12.06.91 Patentblatt 91/24**

(84) Benannte Vertragsstaaten:
**DE FR GB IT**

(56) Entgegenhaltungen:
**CH-A- 623 965**
**DE-A- 3 340 292**
**GB-A- 1 154 812**

(73) Patentinhaber: **PAPST-MOTOREN GmbH & Co.
KG**
**Postfach 1435**
**W-7742 St. Georgen 1 Schwarzwald(DE)**

(72) Erfinder: **Wrobel, Günter**
**Fürstenbergring 8**
**W-7730 Villingen-Schwenningen(DE)**

(74) Vertreter: **Henkel, Feiler, Hänzel & Partner**
**Möhlstrasse 37**
**W-8000 München 80(DE)**

Rank Xerox (UK) Business Services

**Beschreibung**

Die Erfindung betrifft eine Lagerung für einen Antriebsmotor eines Kleinstventilators nach dem Oberbegriff des Patentanspruches 1 bzw. eine Lagerung für einen kollektorlosen Gleichstrommotor nach dem Oberbegriff des Patentanspruches 2.

Ein Kleinstventilator ist beispielsweise in der DE-A-33 40 292 beschrieben.

Die Lagerung der Welle des Antriebsmotors in solchen Ventilatoren erfolgt in Kugellagern oder Gleitlagern, die im allgemeinen ihrerseits in einem Lagertragrohr gehalten sind. Besonders bei Langzeitbetrieb, bei hohen Temperaturdifferenzen und/oder höheren Drehzahlen lockern sich die Lager, vor allem in Spritzgußgehäusen, in ihren Sitzen und verursachen zunehmend Laufgeräusche, die schließlich dazu führen, daß entweder der gesamte Ventilator oder zumindest die Lager ausgetauscht werden müssen.

Dieses Problem besteht sowohl bei Metallgehäusen aus Legierungen von Zink (Zamak), Magnesium, Aluminium, als auch bei Kunststoffgehäusen, also bei Werkstoffen, welche sogenannten kalten Fluß aufweisen bzw. gegenüber den Lagerteilen stark unterschiedliche Wärmedehnungskoeffizienten besitzen, insbesondere also bei Kunststoffen. Die Verlustwärme des Motors verschärft dieses Problem.

Lagersitze in Kunststoffspritzguß exakt fluchtend auszuführen, ist nicht möglich. Wegen der in Grenzen möglichen Winkelverschiebung der Lagerringe gegeneinander können Kugellager eingebaut werden, wobei aber nur für eine verhältnismäßig kurze Laufzeit eine zufriedenstellende Qualität erreicht wird. Bei Gleitlagern dagegen läßt sich die schlechte Fluchtung nicht ausgleichen. Die Lagersitze müssen nachgearbeitet werden.

Aus der GB-A-1 154 812 ist ein Ventilator bekannt, bei dem ein Lagerrohr aus gesintertem Metall hergestellt und mit einem derartigen Außendurchmesser versehen ist, daß es starr in einem Tragrohr durch Preßsitz festgehalten ist. Es sind dabei keine Verspannungs- oder Federmittel vorgesehen, um das Lagerrohr im Tragrohr zu halten.

Weiterhin ist aus der CH-A-623 965 ein Elektrokleinstmotor mit einer Lagerbuchse aus Kunststoff bekannt, welche in eine Lageraufnahme im Rückschlußeisen eingeschoben und axial durch einen Flansch festgelegt ist.

Der Erfindung liegt die Aufgabe zugrunde, die Lagerung eines Antriebsmotors eines Kleinstventilators bzw. die Lagerung eines kollektorlosen Gleichstrommotors so auszubilden, daß eine spanabhebende Nachbearbeitung der Lagersitze überflüssig und die Vorbereitung der Montage mit dieser selbst einfach ist und daß außerdem im Betrieb entstehendes axiales Spiel automatisch ausgeglichen wird.

Diese Aufgabe wird bei einer Lagerung nach dem Oberbegriff des Patentanspruches 1 bzw. 2 erfindungsgemäß durch die in deren jeweiligem kennzeichnenden Teil enthaltenen Merkmale gelöst.

Vorteilhafte Weiterbildungen der Erfindung ergeben sich aus den Unteransprüchen.

Mit der Lösung der Aufgabe gemäß dem kennzeichnenden Teil des Patentanspruchs 1 bzw. 2 bietet die einstückige Gleitlagereinheit als Sinterlager einen besonders großen Speicherraum für Schmieröl. Das Öl wird nämlich in den Poren des Sinterwerkstoffes besser gehalten als in sonstigen Speichern (z.B. Filz, Fett usw.). Auch bei Erwärmung verlieren beispielsweise Filze sehr viel schneller Öl als Sinterlager.

Ausführungsbeispiele der Erfindung sind in den Zeichnungen dargestellt und werden im folgenden näher beschrieben. Es zeigen:

Fig. 1 ein Ausführungsbeispiel eines Ventilators in axialer Draufsicht,

Fig. 2 einen Halbschnitt entlang der Linie II-II in Fig. 1,

Fig. 3 eine vergrößerte, herausgebrochene Schnittansicht eines ersten Ausführungsbeispiels der erfindungsgemäßen Lagerung einer Welle in einem Ventilator,

Fig. 4 eine vergrößerte, herausgebrochene Schnittansicht eines zweiten Ausführungsbeispiels der erfindungsgemäßen Lagerung einer Welle in einem Ventilator, und

Fig. 5 - 8 vier weitere Ausführungsbeispiele in einfacher Darstellung wie Fig. 3.

Gleiche oder gleichwirkende Teile werden nachfolgend mit denselben Bezugszeichen bezeichnet. Die Ausdrücke oben, unten, rechts und links beziehen sich auf die Darstellung in der jeweiligen Figur.

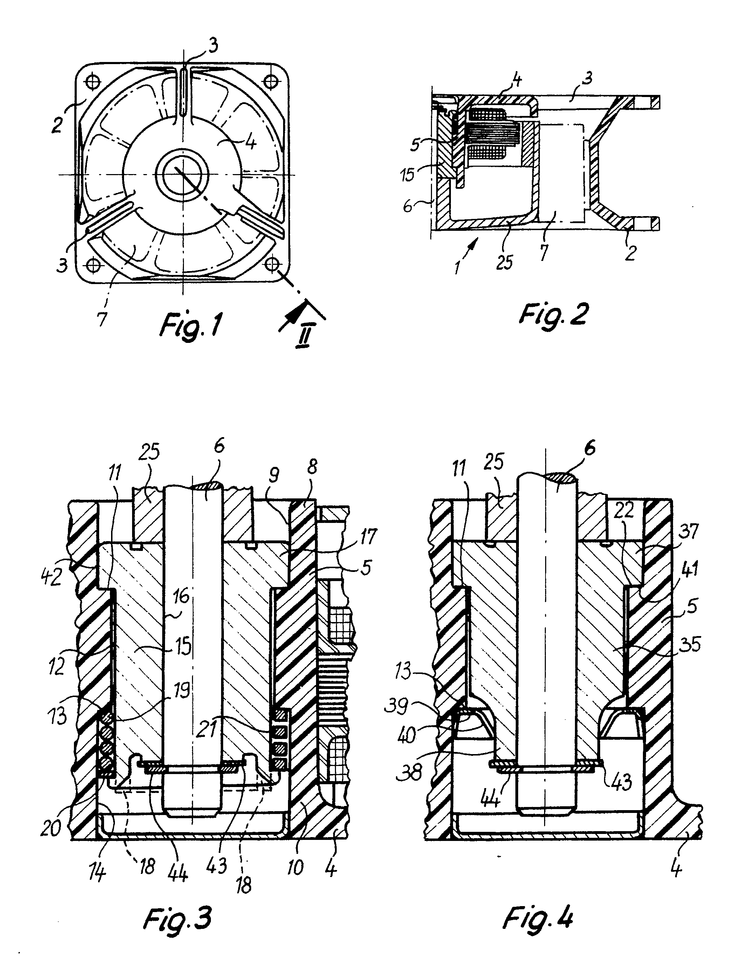

Ein Ventilator 1 (Fig. 1 und 2) besteht aus einem Gehäuse 2, das einen ein Laufrad umgebenden Strömungskanal bildet und dessen Stege 3 mit einem Flansch 4 verbunden sind. An dem Flansch 4 ist ein Lagertragrohr 5 angeordnet. Vorzugsweise sind das Gehäuse 2, die Stege 3, der Flansch 4 und das Lagertragrohr 5 einstückig als zusammen ein Kunststoffspritzteil hergestellt; in bestimmten Anwendungsfällen kann es aber auch als Metallspritzgußteil ausgeführt werden. Eine Antriebswelle 6 (Fig. 2) ist mit dem Rotor des Antriebsmotors fest verbunden. Auf dem Rotor ist das Laufrad mit Flügeln 7 (strichpunktiert) befestigt.

In Fig. 3 ist in vergrößerter Teilschnitt-Ansicht die Lagerung der Welle 6 dargestellt. Das Lagertragrohr 5 ist so gestaltet, daß es für den Einsatz von Gleitlagern und von Kugellagern geeignet ist. An seinem oberen Ende 8 weist das Lagertragrohr 5 einen ersten Lagersitz 9 auf, es folgt in Richtung zum unteren Ende 10 eine erste Schulter 11, danach eine Bohrung 12 mit geringerem Durchmesser als der Lagersitz 9, in bestimmtem, axialem Abstand eine zweite Schulter 13 und abschließend ein zweiter Lagersitz 14, vorzugsweise mit gleichem Durchmesser wie der Lagersitz 9, um im Bedarfsfall Kugellager einsetzen zu können (z.B. bei sehr hohen Drehzahlen).

In das Lagertragrohr 5 ist ein Gleitlager als einstückige Gleitlagereinheit 15, vorzugsweise gesintert, eingesetzt. Diese Gleitlagereinheit 15 weist eine durchgehende Lagerbohrung 16 auf, die als Lauffläche für die Welle 6 dient. An einer Stirnseite ist die Lagereinheit 15 mit einem Ansatz 17 ausgestattet, dessen Außendurchmesser dem des Lagersitzes 9 des Lagertragrohrs 5 entspricht, d.h. der Ansatz 17 kann mit mittlerem Schiebesitz in den Lagersitz 9 eingebracht werden. Dieser Sitz gibt der Lagereinheit 15 die radiale Führung. An der anderen Stirnseite ist die Lagereinheit 15 mit einem bördelförmigen bzw. stauchfähigen Rand 18 (gestrichelt) versehen, der nach Einfügen der Lagereinheit 15 in das Lagertragrohr 5 und Einsetzen eines Federelementes 18, 21 in axialer Richtung umgebördelt oder gestaucht wird.

Dieser zentrierende Ansatz 17 wurde an das Lagertragrohrende, das der Seite des Bodens eines glockenförmigen Rotors 25 des Außenläufermotors benachbart ist, gelegt, um die Rotationsmasse mit Unwucht aufzunehmen und abzustützen.

Eine Seite der Fig. 3 (linke Seite) zeigt den Einsatz des Federelementes, das hier als Schraubenfeder 19 mit rundem Drahtquerschnitt ausgebildet ist. Diese Schraubenfeder 19 liegt mit dem erforderlichen Druck axial einerseits an der Planfläche der Schulter 13 des Lagertragrohrs 5 und andererseits an einer Scheibe 20 an, die vom Rand 18 gehalten wird.

Auf der rechten Seite der Fig. 3 ist statt der Schraubenfeder 19 eine entsprechende Schraubenfeder 21 mit quadratischem Drahtquerschnitt dargestellt, wodurch die Einsparung der Scheibe 20 erreicht wird. Das Federelement aus der Schraubenfeder 19 bzw. 21 fixiert die Lagereinheit 15 in axialer Richtung, d.h. das Federelement ist so ausgelegt, daß die Lagereinheit 15 auch bei Längenänderung des Lagertragrohrs 5 (beispielsweise durch Temperatur- oder Feuchtigkeitseinflüsse) immer gegen die Anlagefläche der Schulter 11 gedrückt wird. Dies ist von großer Bedeutung für Lagertragrohre aus Kunststoff, aber auch für Lagertragrohre aus Metall wird diese vorteilhafte Wirkung erreicht.

Fig. 4 zeigt ein weiteres Ausführungsbeispiel einer Gleitlagereinheit 35, die an einem Ende einen Ansatz 37 (entspricht Ansatz 17 an Lagereinheit 15) enthält, während am anderen Ende ein Ansatz 38 mit geringerem Außendurchmesser vorgesehen ist. Nach Einfügen der Lagereinheit 35 in das Lagertragrohr 5 wird eine Sperrscheibe 39 über den Ansatz 38 bis zur Planfläche 13 geschoben, wobei sich innere Segmente 40 der Sperrscheibe 39 in die Mantelfläche des Ansatzes 38 eingraben und so die axiale Fixierung der Gleitlagereinheit 35 sichern. Dabei wirkt hier die Sperrscheibe 39 entsprechend den oben beschriebenen Schraubenfedern 19 bzw. 21.

Als Verdrehsicherung kann eine der folgenden Möglichkeiten gewählt werden:

a) Drei oder mehr stirnseitig an der Planfläche 22 angesinterte Zähne 41 (vgl. Fig. 3, 4), welche beim Einpressen der Lagereinheit 15, 35 in die Anlagefläche der Schulter 11 eingedrückt werden oder

b) ähnliche Zähne 42, die am Durchmesser der Bohrung 9 angebracht sind, oder

c) die Anlagefläche der Schulter 11 wird durchgehend gezahnt, so daß die Reibung wesentlich erhöht wird.

Axial ist die Welle 6 mittels einer Anlaufscheibe 43 und eines Sicherungsringes 44 in einer Richtung gesichert, in der Gegenrichtung liegt der Rotor 25 des Antriebsmotors an der Lagereinheit 15, 35 an.

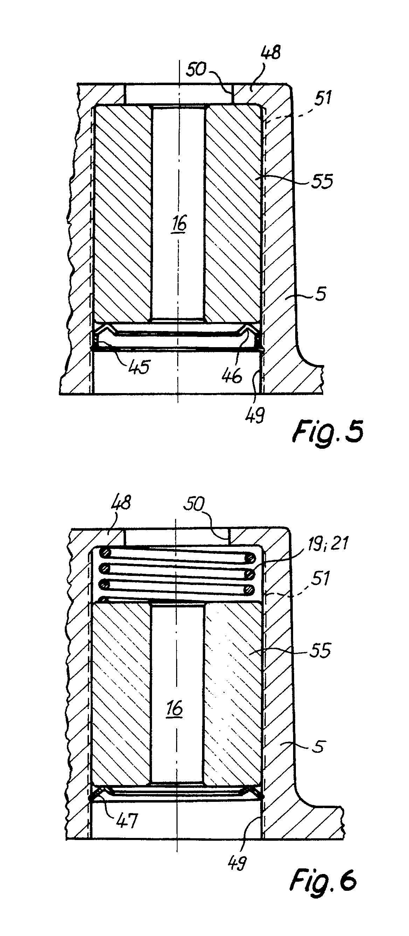

Fig. 5 zeigt eine weitere Möglichkeit, eine Gleitlagereinheit 55 erfindungsgemäß so in ein Spritzgußgehäuse einzubauen, daß maßliche Veränderungen des Spritzgußgehäuses (hier: Lagertragrohr 5) automatisch ausgeglichen werden und daß keine spanabhebende Bearbeitung bezüglich Herstellung und Einbau der Gleitlagereinheit erforderlich ist. Das Lagertragrohr 5 hat aus spritztechnischen Gründen einen konischen Lagersitz. An der Wandung vorgesehene Längsrippen (achsparallel) 51 ermöglichen eine anschließende Kalibrierung zur Herstellung eines zylindrischen Lagersitzes 49, der in der Tiefe durch einen Bund 48 begrenzt ist. Zur Montage der Welle 6 ist ein Durchgangsloch 50 vorgesehen. Nach Einschieben (mittlerer Schiebesitz) der Gleitlagereinheit 55 in den Lagersitz 49 bis an den Bund 48 wird eine Sicherungskappe 45 so in den Lagersitz 49 eingebracht, das sie sich einerseits in die Wandung des Lagersitzes 49 eingräbt und damit an dieser Stelle eine axiale Verschiebung ausschließt und daß andererseits Federnasen 46 der Sicherungskappe 45 die Gleitlagereinheit 55 axial gegen den Bund 48 drücken.

In Fig. 6 ist ein Ausführungsbeispiel gemäß der Erfindung dargestellt, bei dem zwischen dem Bund 48 und einer Stirnseite der Gleitlagereinheit 55 eine Schraubenfeder 19' so eingelegt wird, daß sie einen axialen Druck auf die Gleitlagereinheit 55 ausübt. Auf der gegenüberliegenden Stirnseite der Gleitlagereinheit ist ein Sicherungselement 47 angebracht, das sich in der Wand des Lagersitzes verzahnt und so die Gleitlagereinheit 55 von dieser Seite her festlegt. Hier, wie auch bei den weiter oben beschriebenen Ausführungsbeispielen, besteht das Lagertragrohr 5 aus spritzfähigem Material, wie z.B. Kunststoff, Aluminium- bzw. Magnesiumlegierungen, Zamak usw..

Die erfindungsgemäße Lagerung ist überall dort von Vorteil, wo sehr unterschiedliche Ausdehnungskoeffizienten und andere Faktoren, wie z.B. Schwindung, kalter Fluß, Feuchtigkeitsaufnahme usw., auftreten, was in hohem Maße bei aus Kunststoff gespritzten Gehäusen der Fall ist.

Als Antriebsmotor ist wegen der minimalen Verlustwärme bei Kunststoffgehäusen, d.h. auch Kunststofflagertragrohren, in besonders vorteilhafter Weise ein kollektorloser Gleichstrommotor für ein- oder zweipulsigen Betrieb mit einem sogenannten Reluktanzhilfsmoment vorgesehen, welches dadurch zustande kommt, daß das elektrodynamische Moment von der Statorwicklung her nur ein Wechselfeld aufweist und der magnetische Widerstand des magnetischen Kreises im Statorbereich so über der Drehrotationsstellung des Läuferrades verändert ist, daß magnetische Energie gespeichert wird, solange das elektrodynamische Moment pulsweise antreibt und in den Pulslücken die gespeicherte magnetische Energie durch Zusammenwirken des Rotorpermanentmagneten mit dem Statoreisen wieder frei wird unter Drehmomentbildung.

Solche Motoren sind in der DE-B- 22 25 442 und in der DE-C- 23 46 380 (= CH-A- 597 715) und in der Zeitschrift "asr-digest" Heft 1-2/77 u.a. im einzelnen beschrieben. Diese Motoren sind vorteilhafterweise Außenläufermotoren, in deren Rotor ein Dauermagnet in Form eines Dauermagnetringes oder eines ringförmig gebogenen Dauermagnetbandes angeordnet ist. Die Magnetisierung ist mit Vorteil über der Polteilung trapezförmig oder annähernd trapezförmig bei relativ kleiner Pollücke. In gleicher Weise kann man aber auch andere Dauermagnete verwenden, z.B. eingeklebte Halbschalen oder andere. Die Elektronik zur Regelung eines solchen Motors (beschrieben in DE-A- 30 10 435) benötigt weniger Bauteile als übliche Gleichstrommotoren dieser Art. Daher ist es möglich, auch die Elektronik für die Kommutierung des Motors innerhalb der Außenmaße des Gehäuses 2 des Ventilators 1 unterzubringen, und zwar innerhalb des Motors, vor allem im Bereich des Flansches 4. Die EP-A- 0 084 156 beschreibt eine hier sehr gut verwendbare Kommutierungsschaltung mit wenigen Elementen.

Anstelle des bereits genannten zweipulsigen kollektorlosen Gleichstrommotors mit Reluktanzhilfsmoment (vgl. hieren DE-C- 23 46 380), ist auch der Betrieb mit einem zweipulsigen kollektorlosen Gleichstrommotor ohne Reluktanzhilfsmoment möglich (vgl. hieren DE-A- 27 30 142). Auch in Verbindung mit einem solchen Motor kann das zentrale Lagerrohr aus Kunststoff bestehen und einstückig mit Flansch, Stegen und Außengehäuse gespritzt sein. Besonders gut geht es jedoch mit einem zweipulsigen Reluktanzhilfsmomentmotor, da dessen Wirkungsgrad besonders hoch ist (insbesondere wenn dieser gemäß DE-C- 23 46 380 ausgebildet ist) und dessen Erwärmung entsprechend klein ist, womit eine relativ hohe Stabilität des Lagerrohres gewährleistet ist. Ebenso ist ein noch älterer Antriebsmotor in Verbindung mit der vorliegenden Erfindung vorteilhaft, der auch nur einen Rotorstellungssensor benötigt, welcher nach der DE-C- 1 276 796 ausgebildet ist.

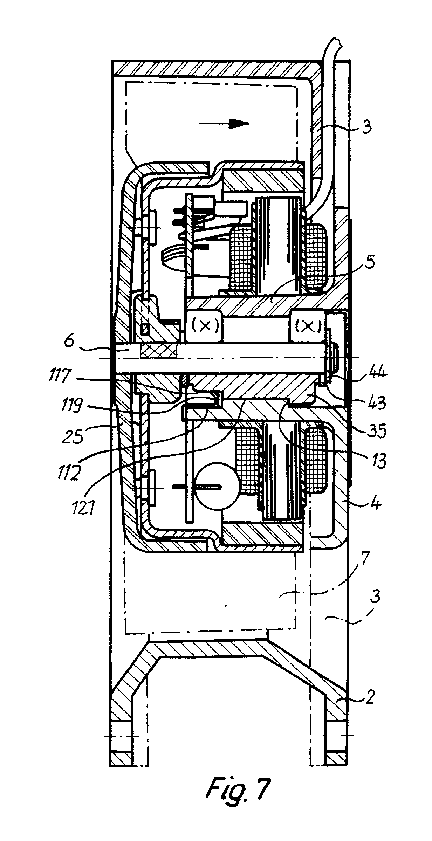

Ersichtlich hat die Außenkontur des Ventilatorgehäuses keinen Einfluß auf die Stabilität des Lagertragrohrs und die Unterbringung der Kommutierungselektronik innerhalb des Motors. Es zeigt auch Fig. 7 ein ringartiges Gehäuse 2, d.h. der allgemeinsten Form von punktsymmetrischer Außenkontur. Ein sogenannter einpulsiger Motor ist in der DE-A- 22 60 069 beschrieben.

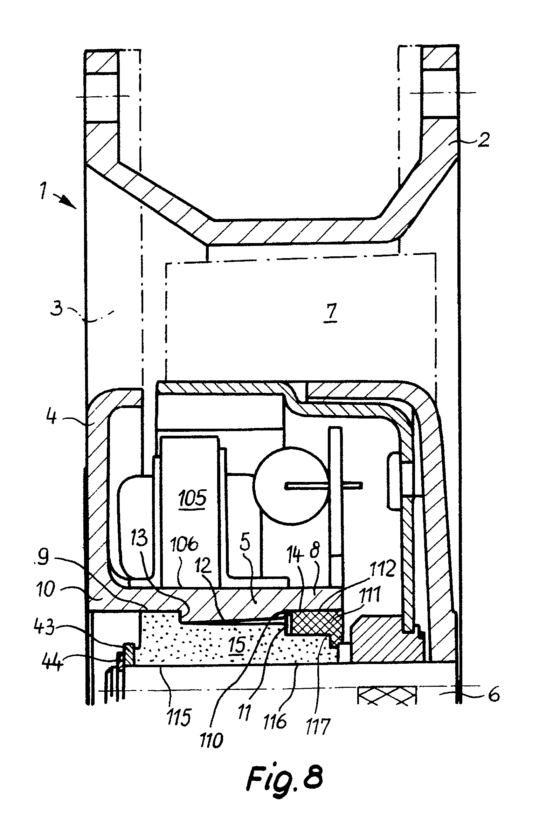

In Fig. 7 ist die einstückige Lagereinheit 15 von der Seite des Flansches 4 her auf Anschlag an der Stirnfläche der Schulter 13 in das Lagertragrohr 5, das mitsamt dem Flansch 4, den Stegen 3, dem umgebenden Gehäuse 2 - wie im Falle der Figur 8 (und auch vorzugsweise der anderen Ausführungsbeispiele) - aus Kunststoff einstückig gespritzt ist, eingesetzt. Der Schiebesitz in einer Zylinderfläche 121 erstreckt sich beidseits der axialen Mitte der Lagereinheit (Sinterkörper 15) etwa auf die halbe axiale Gesamtlänge derselben. Ein S-förmiges (im Querschnitt) kragenartiges Teil 119 aus Federstahl o.dgl. zentriert das linke Ende der Lagereinheit 15 in der "Bohrung" 112' und sichert durch Verhaken seines radial inneren scharfen Randes in einer Zylinderfläche 117, d.h. im relativ weichen Sinterkörpermetall, diesen gegen unzulässig große axiale Verschiebung.

Fig. 8 zeigt ein Ausführungsbeispiel, das ähnlich Fig. 7 ist. Das Lagertragrohr 5 ist einstückig mit dem Kunststoffgehäuse, z.B. über den Flansch 4 verbunden. Auf seiner Außenfläche 106 sitzt ein Statorblechpaket 105. Bei solchen einstückigen Kunststoffgehäusen (wie die Bauteile 2, 3, 4 mit dem Kunststofflagertragrohr 5) sind Kugellager auch prinzipiell zu verspannen. Entscheidend ist aber, daß Laufflächen 115 und 116 von der Welle 6 bzw. der Lagereinheit 15 gut fluchten, so daß die Ungenauigkeit des Kunststoffspritzgußgehäuses sich auf die Lagergüte nicht auswirkt. Beim Ausführungsbeispiel gemäß Fig. 8 ist die Lagereinheit 15 in das Rohr 5 vom Flansch 4 her eingesetzt. Das Kunststoff-Lagertragrohr 5 hat eine Kontur, die auch für Kugellager geeignet ist. Das Lagertragrohr 5 hat zwei an den Schultern 13 und 11 abgesetzte Flächen 9 und 112. Hier kommt es darauf an, daß der die Gleitlagereinheit 15 bildende einstückige Sinterlagerkörper in den Zylinder mit der Fläche 9 mit sattem Spiel auf Anschlag an der Fläche 13 eingeschoben wird. Die Flächen 106 und 9 sollten zueinander mindestens eine gewisse Konzentrizität besitzen. Wenn nur dies gewährleistet ist, sollte die Lagerung des Rotors in der Lagereinheit 15 kein Problem darstellen, wenigstens nicht bei Lüftern mit Motoren relativ großen Luftspalts, z.B. zweipulsigen Reluktanzmomentmotoren (oder anderen 1- bzw. 2-pulsigen kollektorlosen Gleichstrommotoren, wie oben angegeben). Die Lagereinheit 15 ist abgesetzt. Sie hat ein Zwischenstück mit einer zylindrischen Außenfläche in seiner axialen Mitte und die Lauf- bzw. Zylindergleitflächen 115 und 116, die auch eine durchgehende Gleitlagerfläche (von 115 nach 116 fluchtend) bilden können. Die Flächen 115 und 116 müssen nicht unbedingt miteinander fluchten, aber sie sollten zueinander in hohem Maße wirklich koaxial sein. Die in das Lagerrohr 5 eingesteckte rohrförmige Lagereinheit 15 wird nach Anschlag an der Schulter 13 auf der Gegenseite bei der Schulter 11 durch einen Ring 110 (z.B. aus Perbunan) zentriert und dann im Abstand über ein Zwischenelement 111 in einer die Stirnfläche 112 bildenden zylindrischen Ausnehmung gesichert. Das Zwischenelement 111 könnte noch ein zusätzliches Schmiermitteldepot, also ein entsprechend ausgestalteter poröser Ringkörper, und auch ein als Massenbezugsteil katalogmäßig einkaufbares Federdistanzelement sein, wie dies in Fig. 7 dargestellt ist.

Mit einem solchen einstückigen Sinterlager/Kunststofflagertragrohr des damit einstückigen Gehäuses (2 bis 4), bzw. auch in Metalllagerrohrgehäusen mit nicht ausreichend fluchtenden oder nicht ausreichend koaxialen Lagersitzen, ergibt eine derartige einstückige Sinterlagergestaltung eine wirtschaftliche, bei Serienproduktion vorteilhafte Lösung ohne maschinelle Bearbeitung. Die Fläche 12 kann wegen der Spritzgußtechnik konisch sein, während die Flächen 9 und 112 praktisch zylindrisch sein können; d.h. sie können durch spanloses einfaches Kalibrieren ausreichend genau zylindrisch als Lagersitz gemacht werden, was ohne Aufwand besonders mit oben beschriebenen Längsrippen 51 in die Fläche 9 geschieht. Auch die Sitzfläche 106 sollte einigermaßen konzentrisch sein.

Die Erfindung ist in vorteilhafter Weise allgemein auch auf einen kollektorlosen Gleichstrommotor und speziell auf einen in Lagerteilen aus Kunststoff gelagerten kollektorlosen Gleichstrommotor anwendbar und nicht auf einen Kleinstventilator eingeschränkt, obwohl sich die obigen Ausführungsbeispiele auf einen solchen Ventilator beziehen.

## Ansprüche

1. Lagerung für Antriebsmotor eines Kleinstventilators mit einem als Halterung für die Welle (16) des Motors dienenden Lagertragrohr (5), bei der:

   (a) die Lagerung der Welle (6) als Lagereinheit (15, 35, (55) ausgebildet ist und

   (b) das Lagertragrohr (5) mit einem Halterungsflansch (4) verbunden ist,

   dadurch gekennzeichnet, daß

   (c) die Lagereinheit (15, 35, 55) wenigstens in einem axialen Teilbereich des Lagertragrohrs (5) radial zu diesem Teil des Lagertragrohrs (5) durch einen Schiebesitz fixiert ist,

   (d) das Lagertragrohr (5) und der Halterungsflansch (4) einstückig aus spritzfähigem Material bestehen und

   (e) die Lagereinheit (15, 35, 55) mit der Kraft zumindest eines Federelements (19, 21, 39, 46) gegen einen Anschlag (11; 48) beaufschlagt ist.

2. Lagerung für kollektorlosen Gleichstrommotor mit einem als Halterung für die Welle (16) des Motors dienenden Lagertragrohr (5), bei der:

   (a) die Lagerung der Welle (6) als Lagereinheit (15, 35, (55) ausgebildet ist und

   (b) das Lagertragrohr (5) mit einem Halterungsflansch (4) verbunden ist,

   dadurch gekennzeichnet, daß

   (c) die Lagereinheit (15, 35, 55) wenigstens in einem axialen Teilbereich des Lagertragrohrs (5) radial zu diesem Teil des Lagertragrohrs (5) durch einen Schiebesitz fixiert ist,

   (d) das Lagertragrohr (5) und der Halterungsflansch (4) einstückig aus spritzfähigem Material bestehen und

   (e) die Lagereinheit (15, 35, 55) mit der Kraft zumindest eines Federelements (19, 21, 39, 46) gegen einen Anschlag (11; 48) beaufschlagt ist.

3. Lagerung nach Anspruch 1, bei der der Kleinstventilator als axial kompakter Ventilator mit dem zentralen, über den Halterungsflansch (4) und das Lagertragrohr (5) gehalterten Motor, insbesondere einem kollektorlosen Gleichstrommotor, und einem daran befestigten Laufrad (7) ausgebildet ist, wobei ein Gehäuse (2) des Ventilators einen das Laufrad (7) umgebenden Strömungskanal bildet, dadurch gekennzeichnet, daß die Lagereinheit als einstückige Gleitlagereinheit (15, 35, 55) ausgebildet ist.

4. Lagerung nach einem der Ansprüche 1 bis 3, dadurch gekennzeichnet, daß das Federelement eine Schraubenfeder (21) mit quadratischem Drahtquerschnitt ist und einerseits axial gegen eine Fläche (13) des Lagertragrohrs (5) und andererseits gegen einen umgebördelten oder gestauchten Rand (18) der Lagereinheit (15) mit Druck anliegt.

5. Lagerung nach Anspruch 4, dadurch gekennzeichnet, daß die Schraubenfeder (19) einen runden Drahtquerschnitt hat, wobei zwischen dem Rand (18) und der Schraubenfeder (19) noch eine Scheibe (20) angeordnet ist.

6. Lagerung nach einem der Ansprüche 1 bis 3, dadurch gekennzeichnet, daß das Federelement eine Sperrscheibe (39) ist, die sich einerseits auf der Außenwand der Lagereinheit (35) eingräbt und andererseits gegen die Fläche (13) des Lagertragrohrs (5) mit axialem Druck einwirkt.

7. Lagerung nach einem der vorhergehenden Ansprüche, dadurch gekennzeichnet, daß die Lagereinheit (15, 35) zum Außenumfang eines im Durchmesser größer ausgebildeten Ansatzes (17, 37) mindestens eine erhabene Stelle (42) aufweist.

8. Lagerung nach einem der Ansprüche 1 bis 6, dadurch gekennzeichnet, daß auf der an einer Schulter (11) der Lagereinheit (15, 35) anliegenden Planfläche (22) mindestens drei Erhebungen (41) vorgesehen sind.

9. Lagerung nach einem der Ansprüche 1 bis 3, dadurch gekennzeichnet, daß die Lagereinheit (55) mittels Federnasen (46) einer Sicherungskappe (45) axial gegen einen Bund des Lagertragrohrs (5) gedrückt wird.

10. Lagerung nach Anspruch 9, dadurch gekennzeichnet, daß die Lagereinheit (55) axial einerseits gegen ein Sicherungselement (47) anliegt und andererseits von einer axial wirkenden Feder (19, 21) beaufschlagt wird, die auf einer Seite am Bund (48) anliegt und auf der anderen Seite gegen die Lagereinheit (55) drückt.

11. Lagerung nach einem der Ansprüche 1 bis 10, dadurch gekennzeichnet, daß der Motor ein kollektorloser Gleichstrommotor für ein- oder zweipulsigen Betrieb ist.

12. Lagerung nach einem der vorhergehenden Ansprüche, dadurch gekennzeichnet, daß die Lagereinheit (35) über ein Sicherungselement (39), das formschlüssig in ihre Außenfläche eingreift, gegen axiale Verschiebung gesichert ist.

13. Lagerung nach einem der vorhergehenden Ansprüche, dadurch gekennzeichnet, daß die Lagereinheit (35) über ein Element (39, 119), das mittels Kraftschluß radial auf diese einwirkt, gegen axiale Verschiebung gesichert ist.

14. Lagerung nach einem der vorhergehenden Ansprüche, dadurch gekennzeichnet, daß der axiale Teilbereich sich in dem Bereich des einen Endes des Lagertragrohres (5) befindet, welches der Laufradnabe, insbesondere dem Boden eines glockenförmigen Außenrotors (25), benachbart ist.

15. Lagerung nach Anspruch 14, dadurch gekennzeichnet, daß die Federelemente (19, 21, 45, 46) und/oder Sicherungselemente (39, 47) im Bereich des anderen Endes des Lagertragrohrs (5), insbesondere auf der Seite des Flansches (4), vorgesehen sind.

16. Lagerung nach einem der Ansprüche 1 bis 13, dadurch gekennzeichnet, daß der Teilbereich um die axiale Mitte des Lagertragrohres (5) liegt.

17. Lagerung nach einem der Ansprüche 1 bis 14, dadurch gekennzeichnet, daß die Federelemente und/oder Sicherungselemente (19, 21, 45, 46) im Bereich des dem Flansch (4) axial abseitigen Endes des Lagertragrohres (5) vorgesehen sind.

18. Lagerung nach Anspruch 14 oder 16, dadurch gekennzeichnet, daß der Teilbereich sich um die Mitte bis zum von dem Flansch (4) axial abseitigen Ende des Lagertragrohrs (5) erstreckt.

19. Lagerung nach Anspruch 18, dadurch gekennzeichnet, daß am von dem Flansch (4) axial abseitigen Ende des Lagertragrohres (5) ein radial nach innen erstreckender Bund (48) vorgesehen ist, an dem die Lagereinheit (55) axial abgestützt ist, vorzugsweise unter Zwischenschaltung des axial wirkenden Federelementes (19, 21, 45, 46).

20. Lagerung nach Anspruch 17, dadurch gekennzeichnet, daß der Teilbereich in dem dem Flansch (4) benachbarten axialen Endbereich des Lagertragrohres (5) vorgesehen ist.

21. Lagerung nach einem der vorhergehenden Ansprüche, dadurch gekennzeichnet, daß das Lagerrohr (5) mit einem Gehäuse (2) über Stege (3) und den Flansch (4) als einstückiges Kunststoffspritzteil ausgebildet ist.

22. Lagerung nach einem der Ansprüche 1 bis 20, dadurch gekennzeichnet, daß das Lagertragrohr (5) mit einem Gehäuse (29 über Stege (3) und den Flansch (4) als einstückiges Metallspritzteil ausgebildet ist.

23. Lagerung nach einem der Ansprüche 1 bis 6, dadurch gekennzeichnet, daß die Anlagefläche einer Schulter (11) der Lagereinheit durchgehend gezahnt ist.

24. Lagerung nach einem der Ansprüche 1 oder 2, dadurch gekennzeichnet, daß die Lagereinheit (15, 35, 55) als wenigstens ein Kugellager (Fig. 7) aufweisend ausgebildet ist.

25. Lagerung nach einem der Ansprüche 1 oder 2, dadurch gekennzeichnet, daß die Lagereinheit (15, 35, 55) als vorzugsweise zwei Kugellager (Fig. 7) aufweisend ausgebildet ist.

**Claims**

1. Bearing support for the drive motor of a minifan with a bearing support tube (5) serving as the mounting support for the motor shaft (16), in which

   (a) the bearing support of the shaft (6) is constructed as a bearing unit (15, 35, 55) and
   (b) the bearing support tube (5) is connected to a retaining flange (4), characterized in that
   (c) at least in an axial partial region of the bearing support tube (5), the bearing unit (15, 35, 55) is radially fixed with respect to said part of the bearing support tube (5) a sliding fit,
   (d) the bearing support tube (5) and the retaining flange (4) are produced in one piece from injection mouldable material and
   (e) with the tension of at least one spring element (19, 21, 39, 46), the bearing unit (15, 35, 55) is urged against a stop member (11, 48).

2. Bearing support for a commutatorless direct current motor with a bearing support tube (5) serving as the mounting for the shaft (16), in which

   (a) the bearing support of the shaft (6) is constructed as a bearing unit (15, 35, 55) and
   (b) the bearing support tube (5) is connected to a retaining flange (4), characterized in that
   (c) at least in an axial partial region of the bearing support tube (5), the bearing unit (15, 35, 55) is radially fixed by a sliding fit to this part of the bearing support tube (5),
   (d) the bearing support tube (5) and the retaining flange (4) are produced in one piece from injection mouldable material and
   (e) with the tension of at least one spring element (19, 21, 39, 46) the bearing unit (15, 35, 55) is urged against a stop member (11, 48).

3. Bearing support according to claim 1, in which the minifan is constructed as an axially compact fan with the central motor, particularly a commutatorless direct current motor, secured by means of the retaining flange (4) and the bearing support tube (5), and an impeller (7) fixed thereto, the fan casing (2) forming a flow duct surrounding the impeller (7), characterized in that the bearing unit is constructed as a one-piece slide bearing unit (15, 35, 55).

4. Bearing support according to one of the claims 1 to 3, characterized in that the spring element is a coil spring (21) with square wire cross-section and engages on the one hand axially against a face (13) of the bearing support tube (5) and on the other against a flanged-over or upset rim (18) of the bearing unit (15) under pressure.

5. Bearing support according to claim 4, characterized in that the coil spring (19) has a round wire cross-section and between the rim (18) and the coil spring (19) is also positioned a disk (20).

6. Bearing support according to one of the claims 1 to 3, characterized in that the spring element is a locking disk (39), which on the one hand engages on the outer wall of the bearing unit (35) and on the other acts against the face (13) of the bearing support tube (5) with axial pressure.

7. Bearing support according to one of the preceding claims, characterized in that the bearing unit (15, 35) has at least one raised point (42) with respect to the outer circumference of a larger diameter extension (17, 37).

8. Bearing support according to one of the claims 1 to 6, characterized in that there are at least three protuberances (41) on a plane surface (22) engaging on a shoulder (11) of the bearing unit (15, 35).

9. Bearing support according to one of the claims 1 to 3, characterized in that the bearing unit (55) is pressed by means of the spring projections (46) of a retaining cap (45) in axial manner against a flange of the bearing support tube (5).

10. Bearing support according to claim 9, characterized in that the bearing unit (55) on the one hand axially engages against a locking element (47) and on the other is subject to the action of an axially acting spring (19, 21), which engages on one side on the flange (48) and on the other side presses against the bearing unit (55).

11. Bearing support according to one of the claims 1 to 10, characterized in that the motor is a commutatorless direct current motor for single or double-pulse operation.

12. Bearing support according to one of the preceding claims, characterized in that the bearing unit (35) is secured against axial displacement by means of a locking element (39), which positively engages in its outer face.

13. Bearing support according to one of the preceding claims, characterized in that the bearing unit (35) is fixed against axial displacement by means of an element (39, 119), which acts radially thereon by means of force closure.

14. Bearing support according to one of the preceding claims, characterized in that the axial partial region is located in the vicinity of one end of the bearing support tube (5), which is adjacent to the impeller hub, particularly the bottom of a bell-shaped external rotor (25).

15. Bearing support according to claim 14, characterized in that the spring elements (19, 21, 45, 46) and/or the locking elements (39, 47) are provided in the vicinity of the other end of the bearing support tube (5) and in particular on the side of the flange (4).

16. Bearing support according to one of the claims 1 to 13, characterized in that the partial region is located about the axial centre of the bearing support tube (5).

17. Bearing support according to one of the claims 1 to 14, characterized in that the spring elements and/or locking elements (19, 21, 45, 46) are provided in the vicinity of the end of the bearing support tube (5) axially remote from the flange (4).

18. Bearing support according to claims 14 or 16, characterized in that the partial region extends about the centre up to the end of the bearing support tube (5) axially remote from the flange (4).

19. Bearing support according to claim 18, characterized in that at the end of the bearing support tube (5) axially remote from the flange (4) is provided a radially inwardly extending collar (48), on which the bearing unit (55) is axially supported, preferably accompanied by the interposing of the axially acting spring element (19, 21, 45, 46).

20. Bearing support according to claim 17, characterized in that the partial region is provided in the axial end region of the bearing support tube (5) adjacent to the flange (4).

21. Bearing support according to one of the preceding claims, characterized in that the bearing support tube (5) is constructed as a one-piece plastic injection moulding with a casing (2) via webs (3) and the flange (4).

22. Bearing support according to one of the claims 1 to 20, characterized in that the bearing support tube (5) is constructed as a one-piece metal die cast part with a casing (29) via webs (3) and the flange (4).

23. Bearing support according to one of the claims 1 to 6, characterized in that the bearing surface of a boulder (11) of the bearing unit is serrated throughout.

24. Bearing support according to one of the claims 1 or 2, characterized in that the bearing unit (15, 35, 55) has at least one ball bearing (fig. 7).

25. Bearing support according to one of the claims 1 or 2, characterized in that the bearing unit (15, 35, 55) preferably has two ball bearings (fig. 7).

## Revendications

1. Placement de paliers pour un moteur d'un ventilateur miniature, comportant un tube-support de palier (5) servant à maintenir l'arbre (16) du moteur, ce placement étant tel que :

(a) le montage de l'arbre (6) est réalisé au moyen d'une pièce servant de coussinet (15,35,55), et que

(b) le tube porte-palier (5) est relié à un flasque (4) lui servant de monture,

caractérisé en ce que :

(c) la pièce servant de coussinet (15,35,55) est maintenue en place, au moins sur une partie de la longueur du tube porte-palier (5) et radialement par rapport à cette partie du tube porte-palier (5), par un logement dans lequel on a enfoncé ce coussinet par glissement,

(d) le tube porte-palier (5) et le flasque lui servant de monture (4) constituent une seule pièce d'une matière pouvant être moulée par injection,

(e) la pièce servant de coussinet (15,35,55) est soumise à l'effort d'au moins un élément élastique (19,21,39,46) qui l'appuie contre une butée (11 ; 48).

2. Placement de paliers pour un moteur à courant continu sans collecteur, comportant un tube porte-palier (5) pour le montage de l'arbre (16) du moteur, ce système étant tel que :

(a) le montage de l'arbre (6) est réalisé au moyen d'une pièce servant de coussinet (15,35,55), et que

(b) le tube porte-palier est relié à un flasque (4) lui servant de monture,

caractérisé en ce que :

(c) la pièce servant de coussinet (15,35,55) est maintenue en place, au moins sur une partie de la longueur du tube porte-palier (5) et radialement par rapport à cette partie du tube porte-palier (5), par un logement dans lequel on a enfoncé ce coussinet par glissement,

(d) le tube porte-palier (5) et le flasque lui servant de monture (4) constituent une seule pièce d'une matière pouvant être moulée par injection, et

(e) la pièce servant de coussinet (15,35,55) est soumise à l'effort d'un élément élastique (19,21,39,46) qui l'appuie contre une butée (11 ; 48).

3. Placement selon la revendication 1, dans lequel le ventilateur miniature est un ventilateur axial de type compact dont le moteur central est maintenu par l'intermédiaire du flasque servant de monture (4) et du tube porte-palier (5), tel en particulier qu'un moteur à courant continu sans collecteur, auquel est fixée une roue de ventilation (7), un boîtier (2) du ventilateur constituant un canal d'écoulement qui entoure la roue de ventilation (7), caractérisé en ce que la pièce servant de coussinet est constituée par un coussinet monobloc lisse (15,35,55).

4. Placement selon l'une des revendications 1 à 3, caractérisé en ce que l'élément élastique est constitué par un ressort hélicoïdal (21) confectionné avec un fil métallique de section carrée, ce ressort étant monté en appui avec effort axial d'une part contre une face (13) du tube porte-palier (5), et d'autre part contre une bordure (18) de la pièce servant de coussinet (15), cette bordure étant à cet effet déformée par refoulement ou pourvue d'un bourrelet rabattu.

5. Placement selon la revendication 4, caractérisé en ce que le ressort hélicoïdal (19) est constitué par un fil métallique rond, et en ce qu'une rondelle (20) est montée en outre entre la bordure (18) et le ressort hélicoïdal (19).

6. Placement selon l'une des revendications 1 à 3, caractérisé en ce que l'élément élastique est constitué par une rondelle d'arrêt (39) qui mord d'un côté dans la pièce servant de coussinet (35) et exerce de l'autre côté une poussée axiale sur la face (13) du tube porte-palier (5).

7. Placement selon l'une des revendications précédentes, caractérisé en ce que la pièce servant de coussinet (15,35) présente au moins une zone profilée (42) sur le pourtour d'une partie en saillie (17,37) de plus grand diamètre.

8. Placement selon l'une des revendications 1 à 6, caractérisé en ce qu'au moins trois bossages en saillie (41) sont prévus sur la face d'appui plane (22) sur laquelle repose un épaulement (11) du coussinet monobloc (15,35).

9. Placement selon l'une des revendications 1 à 3, caractérisé en ce que le coussinet monobloc (55) est poussé en appui contre un rebord du tube porte-palier (5) par des becs élastiques (46) d'une calotte d'arrêt (45).

10. Placement selon la revendication 9, caractérisé en ce que le coussinet monobloc (55) d'une part repose axialement sur un organe d'arrêt (47), et d'autre part subit la poussée axiale d'un ressort (19,21) monté en compression entre le rebord (48) et le coussinet monobloc (55).

11. Placement selon l'une des revendications 1 à 10, caractérisé en ce que le moteur est un moteur à courant continu sans collecteur, prévu pour fonctionner sur l'une des alternances du courant alternatif d'alimentation, ou sur les deux alternances.

12. Placement selon l'une des revendications précédentes, caractérisé en ce que le coussinet monobloc (35) est maintenu en place par un organe d'arrêt (39) qui mord dans la face extérieure du bloc du coussinet en assurant un effet de verrouillage pour empêcher un mouvement dans le sens axial.

13. Placement selon l'une des revendications précédentes, caractérisé en ce que le coussinet monobloc (35) est maintenu en place par un organe de verrouillage (39,119) agissant dans le sens radial sur le coussinet pour empêcher un mouvement axial.

14. Placement selon l'une des revendications précédentes, caractérisé en ce que la partie considérée de la longueur du tube porte-palier (5) se trouve à l'endroit de l'une des extrémités de ce tube, proche du moyeu de la roue de ventilation, et en particulier proche du fond d'un rotor extérieur en forme de cloche (25).

15. Placement selon la revendication 14, caractérisé en ce que l'organe élastique (19,21,45,46) et/ou les organes d'arrêt (39,47) sont prévus à l'endroit de l'autre extrémité du tube porte-palier (5), et en particulier du côté du flasque (4).

16. Placement selon l'une des revendications 1 à 13, caractérisé en ce que la partie considérée de la longueur du tube porte-palier (5) est située au voisinage de la moitié de la longueur de celui-ci.

17. Placement selon l'une des revendications 1 à 14, caractérisé en ce que les organes élastiques et/ou les organes d'arrêt (19,21,45,46) sont prévus à l'endroit de l'extrémité du tube porte-palier (5) qui est axialement opposée au flasque (4).

18. Placement selon la revendication 14 ou 16, caractérisé en ce que la partie considérée de la longueur du tube porte-palier (5) se trouve au voisinage de la moitié de celui-ci jusqu'à l'extrémité ou tube porte-palier (5) qui est axialement opposée au flasque (4).

19. Placement selon la revendication 18, caractérisé en ce qu'un rebord(48)en saillie radiale vers l'intérieur est prévu à l'extrémité du tube porte-palier (5) qui est axialement opposée au flasque (4), ce rebord étant prévu pour retenir le coussinet monobloc (55) en appui dans le sens axial, avec de préférence une interposition de l'organe élastique agissant dans le sens axial (19,21,45,46).

20. Placement selon la revendication 17, caractérisé en ce que la partie considérée de la longueur du tube porte-palier (5) est prévue à l'endroit de l'extrémité de ce tube qui est voisine du flasque (4).

21. Placement selon l'une des revendications précédentes, caractérisé en ce que le tube porte-palier (5) est réalisé en matière plastique et forme une seule pièce moulée par injection avec le flasque (4) et un boîtier (2) auquel il est associé par des barreaux de liaison (3).

22. Placement selon l'une des revendications 1 à 20, caractérisé en ce que le tube porte-palier (5) est réalisé en matière plastique et forme une seule pièce moulée par injection avec le flasque (4) et avec un boîtier (29) auquel il est associé par des barreaux de liaison(3).

23. Placement selon l'une des revendications 1 à 6, caractérisé en ce que la face d'appui d'un épaulement (11) du coussinet monobloc est pourvue de dentures sur toute sa surface.

24. Placement selon l'une des revendications 1 ou 2, caractérisé en ce que la pièce servant de coussinet (15, 35,55) est prévue pour comporter au moins un roulement à billes (Fig. 7).

25. Placement selon l'une des revendications 1 ou 2, caractérisé en ce que la pièce servant de coussinet (15,35, 55) est prévue pour comporter au moins deux roulements à billes (Fig. 7).

Fig.1

Fig.2

Fig.3

Fig.4

Fig. 5

Fig. 6

Fig. 7

*Fig.8*